# EUROPÄISCHE PATENTANMELDUNG

(11) **EP 0 768 372 A2**
(43) Veröffentlichungstag der Anmeldung: **16.04.1997**
(21) Anmeldenummer: 96116383.9
(22) Anmeldetag: 12.10.1996
(51) Int. Cl.: C12G 3/04

(54) **Zum Verzehr geeignete flüssige Zubereitung**

(30) Priorität: 12.10.1995 DE 19537967
(71) Anmelder: Eckes Aktiengesellschaft, D-55268 Nieder-Olm (DE)
(72) Erfinder: Kolb, Erich, Dr., 55268 Nieder-Olm (DE); Habersam, Helmut, 55628 Nieder-Olm (DE); Simson, Ingrid, 55122 Mainz (DE)
(74) Vertreter: Fuchs, Luderschmidt & Partner

(57) **Zusammenfassung**

Die vorhegende Erfindung betrifft eine zum Verzehr geeignete flüssige Zubereitung, enthaltend Alkohol, Eigelb, Eiklar, Pflanzensäfte und/oder Genußsauren, Süßungsmittel, Wasser sowie gegebenenfalls übliche Zusätze, dadurch gekennzeichnet, daß der Gehalt an gelösten Gasen 25 mg/l nicht übersteigt, sowie ein Verfahren zu deren Herstellung.

## Beschreibung

Gegenstand der Erfindung ist eine zum Verzehr geeignete flüssige Zubereitung, enthaltend Alkohol, Eigelb, Eiklar, Pflanzensäfte und/oder Genußsäuren, Süßungsmittel, Milcherzeugnisse, Wasser sowie gegebenenfalls übliche Zusätze, sowie ein Verfahren zu deren Herstellung.

Die Beliebtheit klassischer Liköre wird mehr und mehr durch moderne Tendenzen beeinträchtigt, so daß der Markt dieser Produkte seit Jahren eine stagnierende und bei manchen Produktgruppen eine rückläufige Tendenz zeigt. Dieses Verbraucherverhalten läßt sich teilweise durch das neue Konsumverhalten der potentiellen Käuferschicht im Alter zwischen 20 und 35 Jahren erklären, wonach Liköre, ebenso wie andere Spirituosen, im Vergleich zu früher häufiger als Mixgetränke konsumiert werden. So erfreuen sich z. B. Mischungen aus Weinbrand, Whisky oder Frucht- bzw. Fruchtsaftlikören mit Sahne in den letzten Jahren zunehmender Beliebtheit. Neuheiten werden angenommen, wobei das Getränk in der Regel seine traditionelle und kulturelle Beziehung behalten, aber gleichwohl eingefahrene Gleise verlassen soll. Die Verknüpfung von Tradition und Innovation dürfte der Trend jugendlicher Liköre sein.

Als weitere Tendenz im Verbraucherverhalten ist, nicht zuletzt aus wirtschaftlichen Aspekten, der Wunsch nach Likören mit niedrigen Alkoholgehalten zu beobachten. Dieses Verhalten geht mit dem Verbraucherwunsch nach vielfältigen Verzehrmöglichkeiten solcher Liköre (Weill: Moderne Tendenzen bedrängen Likörklassiker, Haarmann & Reimer GmbH, Holzminden. Contact Nr. 39, undatiert, S. 21 - 23) einhet.

Attraktivität und Image herkömmlicher Liköre zeigen auf, daß gerade auch für eihaltige alkoholische Getränke der Wunsch nach Produkten mit neuartigem Erscheinungsbild und Geschmack besteht, wobei besondere Anforderungen an Homogenität und hygienische Beschaffenheit und die damit verbundene physikalische und mikrobiologische Haltbarkeit gestellt werden.

Ein wesentliches Qualitätskriterium für eihaltige Produkte ist auch ihre einwandfreie mikrobiologische Beschaffenheit. Viele Verbraucher wurden in den letzten Jahren durch Berichte über Erkrankungen nach dem Verzehr von mit pathogenen Mikroorganismen infizierten Lebensmitteln verunsichert. Häufig waren dabei Eier und Eiprodukte die erregertragenden Lebensmittel. Dieser Aspekt ist bei sachgerechter Herstellung und Lagerung herkömmlicher eihaltiger Liköre allerdings nicht relevant, da davon auszugehen ist, daß nur wenige oder keine lebenden Mikroorganismen in das Produkt gelangen und daß durch den hohen Alkohol- und Zuckergehalt herkömmlicher Produkte nicht nur ein Wachstum unterbunden wird, sondern nach relativ kurzer Zeit ein Absterben der lebenden Keime zu beobachten ist.

Nach Bolder et al. (Survival of Spoilage and Potentially Pathogenic Microorganisms in Egg Nogg, Lebensm.-Wiss. u. Technol. 20, 151-154, 1987) sind z.B. Lactobacillus spp., Salmonellen und Staphylococcus aureus in Eierlikören mit Alkoholgehalten > 10% vol nicht lebensfähig. Ebenso werden durch die bei der Eierlikörherstellung übliche Erhitzung auf Temperaturen bis 65 °C die vegetativen Formen abgetötet. Die Untersuchungen von Bolder et al. zeigten jedoch auch, daß Bacillus cereus-Sporen den Kontakt mit 17,5 % vol Ethanol in Eierlikör über einen Beobachtungszeitraum von 40 Tagen überlebten Herkömmliche eihaltige alkoholische Getränke müssen daher über einen ausreichend hohen Alkoholgehalt verfügen, damit ein mikrobielles Wachstum sicher unterdrückt wird.

Eihaltige alkoholische Getränke sind, ebenso wie Mischungen derartiger Getränke mit anderen Zutaten bereits seit langem bekannt. In Wüstenfeld, Haeseler: "Trinkbranntweine und Liköre", Berlin und Hamburg 1964, werden Eierliköre beschrieben, die zur Abrundung z. B. mit Kirschwasser, Zitronendestillaten, Weinhefeöl, natürlichem Bittermandelaroma oder Vanillin gemischt werden. Spezielle eihaltige Liköre sind die sogenannten "Wachteleierliköre", die unter Verwendung von Wachteleigelb anstelle von Hühnereigelb hergestellt werden. Des weiteren sind eine Vielzahl alkoholischer eihaltiger Mix- oder Bargetränke wie Flips, die meist unter Verwendung verschiedener Spirituosen, Fruchtsäfte und ganzer Eier schaumig gemixt werden, "Egg-Noggs", die aus Biern, Milch, Spirituosen oder Wein usw. gemischt werden, bekannt. So besitzt z. B. Eierlikör mit Zitronensaftzusatz einen Geschmack nach frischem Eigelb mit harmonisch abgerundeter Zitronennote (Pilz: Getränke-ABC, Leipzig, VEB Fachbuchverlag 1985). In der Regel handelt es sich um frisch zubereitete, zum alsbaldigen Verzehr bestimmte Produkte. Werden sie hingegen gelagert, treten abhängig von der Höhe des Eigehalts nach kurzer Zeit mehr oder Weniger stark ausgeprägte unerwünschte ölige Abscheidungen auf.

Die DE 35 33 456 A1 beschreibt alkoholische Getränke, die sich durch einen hohen Eiweißgehalt auszeichnen, da sie unter Verwendung von Wachtelvollei hergestellt werden. Daneben enthalten sie andere Zutaten wie z. B. Süßungsmittel und Spurenelemente und weisen einen Alkoholgehalt von 22,5 % vol auf.

Ein Verfahren zur Herstellung eines stabilisierten Elixiers auf Wachteleierbasis mit stärkender Wirkung und mittlerem Alkoholgehalt wird in GB 2 164 353 A beschrieben. Das Verfahren besteht darin, daß Wachteleipulver mit Zucker vermischt wird, nach Zugabe von Ethylalkohol, gegebenenfalls unter Zusatz eines Konservierungsmittels und/oder Antioxidans, in einer Kolloidmühle mit hoher Drehzahl bis zu einer Partikelgröße < 20 micron vermahlen wird, anschließend mit einem Stabilisator gemischt und bis zur gewünschten Konzentration mit Wasser verdünnt wird, wobei die Mischung gegebenenfalls nochmals einer Nachhomogenisation unterworfen wird.

Die DE 41 04 854 A1 beschreibt die Verwendung von Obstbänden, Obstlikören oder obstbrandähnlichen, künstlichen Geschmacksstoffen allein oder in Verbindung mit Weingeist zur Zubereitung von Likören, zu deren Herstellung u.a. Eigelb, Zucker und konzentrierte Milchprodukte, z.B. Kondensmilch eingesetzt werden.

Ein gemäß der DD 216 042 A1 beschriebenes Verfahren zur Herstellung von lagerstabilem, in mikrobiologischer und sensorischer Hinsicht einwandfreiem Eierlikör aus kühlgelagertem Eigelb besteht darin, daß Eigelb mit so hohen Zusätzen an Süßungsmitteln versetzt und gleichzeitig bei solchen Temperaturen oberhalb des Gefrierpunktes gelagert wird, daß eine Senkung der Wasseraktivität des Eigelbs erreicht wird und daß eine Lagertemperatur angewendet wird, die ein bis fünf Grad oberhalb des Gefrierpunktes liegt.

Die WO 83/02625 beschreibt ein Verfahren zur Herstellung von eihaltigen Getränken mit niedrigen Alkohol- und Zuckergehalten, wobei pasteurisierter Wein nach Zusatz von Stabilisatoren und Honig homogenisiert und pasteurisiert wird und diene Mischung im Anschluß mit konserviertem Eigelb bei ca. 40 °C nochmals homogenisiert wird. Der Alkoholgehalt kann gegebenenfalls durch Zugabe von Primasprit erhöht werden. Durch Imprägnierung mit Kohlendioxid kann ein erfrischender Effekt erzielt werden.

Alkoholhaltige Produkte auf der Basis von Pflanzensäften oder -extrakten und Milchprodukten sind aus der EP 463 696 A1 bekannt. Diese Produkte weisen pH-Werte von < 5 auf und enthalten keinen Zusatz von Eigelb.

Die EP 0 211 118 A1 beschreibt ein Verfahren zur Herstellung homogener Trinkzubereitungen unter Verwendung von Fruchtsäften und Eiern, dadurch gekennzeichnet, daß durch Feinstzerkleinerung des Eiweißpräzipitats dieses homogen in der Flüssigkeit verteilt wird. Eine Lösung zur Verhinderung des bei der Lagerung auftretenden Eierölabscheidung im danach hergestellten Produkt wird allerdings nicht beschrieben.

Das Erscheinungsbild von aus dem Stand der Technik bekannten herkömmlichen eihaltigen alkoholischen Getränken ist geprägt durch das Auftreten von Eierölabscheidungen, die sich während der üblichen Lagerung z.B. als Tröpfchen im Flaschenhals ansammeln und eine optische Beeinträchtigung darstellen, was zur Ablehnung derartiger Produkte durch den Verbraucher führt bzw. führen kann. Dieses Problem wird häufig durch Anbringen geeigneter Etiketten, z.B. Halsschleifen, kaschiert.

Marktbeobachtungen und Verbraucherbefragungen haben gezeigt, daß bei vielen Verbrauchern ein Bedarf nach attraktiven Produkten mit neuartigem Erscheinungsbild und Geschmack besteht, bei denen zudem keine Abscheidungen von Eieröl auftreten und die einen relativ geringen Alkoholgehalt aufweisen.

Die Aufgabe der vorliegenden Erfindung besteht daher darin, zum Verzehr geeignete alkoholhaltige flüssige Zubereitungen bereitzustellen, die die Nachteile dieser bekannten Zubereitungen nicht aufweisen und ferner ein neuartiges Erscheinungsbild und einen neuartigen Geschmack sowie einen hohen Genußwert bei relativ geringen Alkoholgehalten besitzen.

Erfindungsgemäß wurde überraschend gefunden, daß dieie Aufgabe durch eine flüssige Zubereitung der eingangs genannten Art gelöst werden kann, die dadurch gekennzeichnet ist, daß sie
wenigstens 5 % vol Alkohol
10 bis 500, vorzugsweise 20 bis 400 g/l Eigelb,
wenigstens 95 g/l Gesamtextrakt und
wenigstens 13 mval/l titrierbare Säure
enthält und eine Viskosität von 10 bis 900 mPas aufweist und daß der Gehalt an gelösten Gasen 25 mg/l nicht übersteigt.

Durch die weitgehende Abwesenheit gelöster Gase weisen die erfindungsgemäßen alkoholhaltigen flüssigen Zubereitungen, wie Getränke, z.B. Liköre, im Vergleich zu herkömmlichen eihaltigen alkoholischen Getränken bei den üblichen Lagerbedingungen bis zu ca. einem Jahr Lagerung keine Abscheidungen von sogenanntem Eieröl auf, wie sie bei herkömmlichen Produkten bereits nach wenigen Wochen beobachtet werden und vom Verbraucher als Wertminderung wahrgenommen werden.

Durch das in den erfindungsgemäßen Zubereitungen gewählte Alkohol-Süße-Säure-Verhältnis, gegebenenfalls in Kombination mit geschmacksabrundenden Zusätzen wird erfindungsgemäß den Zubereitungen ein neuartiges Geschmacksprofil und gegenüber herkömmlichen Produkten ein erhöhter Genußwert verliehen.

Der Gehalt an gelösten Gasen darf in den erfindungsgemäßen Zubereitungen 25 mg/l vorzugsweise 10 mg/l und insbesondere 5 mg/l nicht übersteigen Die Bestimmung des Gehaltes an gelösten Gasen wird volumetrisch in der randvoll gefüllten und geschlossenen Flasche durchgeführt. Dazu wird die Flasche in den dafür vorgesehenen Gerät plaziert, mit einer Anstichvorrichtung eine Nadel in das Flascheninnere geschoben und das Gerät solange in einer Wanne mit Ultraschall beaufschlagt, bis der abgelesene Meßwert konstant bleibt. Die Meßwertangabe erfolgt nach entsprechender Eichung entweder in Volumen- oder in Gewichtseinheiten.

Die erfindungsgemäßen Zubereitungen weisen einen Alkoholgehalt von wenigstens 5 % vol, vorzugsweise von 10 bis 20 % vol und insbesondere von 12 bis 17 % vol auf. Erfindungsgemäß kann jeder zum Verzehr geeignete Alkohol angewandt werden. Vorzugsweise wird der Zubereitug Alkohol (Ethylalkohol) landwirtschaftlichen Ursprungs zugesetzt. Geeignet sind beispielsweise auch Destillate landwirtschaftlichen Ursprungs, Alkohol oder Destillate aus Wein, getrockneten Weintrauben und anderen Früchten, Branntwein, Brandy oder Tresterbrand oder andere alkoholische Getränke und Spirituosen, die jeweils einzeln oder in Form von Mischungen eingesetzt werden können.

Das für die erfindungsgemäßen Zubereitungen verwendete Eigelb sollte einen arttypischen frischen Geschmack und, abhängig vom gewünschten Eigelbgehalt im Fertigerzeugnis, eine intensiv gelbe bis orange-gelbe Farbe besitzen. Geeigneterweise kann es im Gemisch mit Eiklar und Zucker verwendet werden, wobei - bezogen auf den Eigelbgehalt - ein Mindestanteil von z.B. 20 % Eiklar geeignet ist. Es können jedoch auch höhere oder niedrigere Eiklaranteile angewandt werden. Der Eigelbgehalt beträgt in den erfindungsgemäßen Zubereitungen 10 bis 500 g/l, vorzugsweise 20 bis 400 g/l. Das Eigelb kann auch ganz oder teilweise durch cholesterinarmes oder cholesterinfreies Eigelb, wie es z.B. gemäß den in den US-PS 5,292,546 und 5,342,633 beschriebenen Verfahren hergestellt wird, ersetzt werden. Zur Herstellung der erfindungsgemäßen Zubereitung können auch Eigelbtrockenerzeugnisse, z.B. gefriergetrocknetes Eigelb verwendet werden. In diesem Fall sind die Mengenangaben auf das rekonstituierte Produkt zu beziehen.

Unter dem "Gesamtextraktgehalt" wird erfindungsgemäß die Gesamtmenge an in der Zubereitung enthaltenen Stoffen, d.h. Zucker und "Nicht-Zucker-Stoffe", wie Säuren, Mineralstoffe, Fett, Eiweiß und dergleichen verstanden. Der Gesamtextraktgehalt beträgt erfindungsgemäß wenigstens 95 g/l und liegt vorzugsweise im Bereich von 95 bis 800 g/l.

Der Gehalt der erfindungsgemäßen Zubereitung an titrierbarer Säure beträgt wenigstens 13 mval/l und liegt vorzugsweise im Bereich von 13 bis 100 mval/l und insbesondere im Bereich von 35 bis 58 mval/l. Unter "titrierbarer Säure" wird erfindungsgemäß die Summe der aus den Pflanzensäften und/oder zugesetzten Genußsäuren stammenden Säuren verstanden. Die Bestimmung erfolgt durch potentiometrische Titration mit 0,1 n oder 0,25 n Natronlauge aufeinen pH-Wert von 7,0, wobei der Gehalt in Milliäquaivalenten pro Liter (mval/l) angegeben wird.

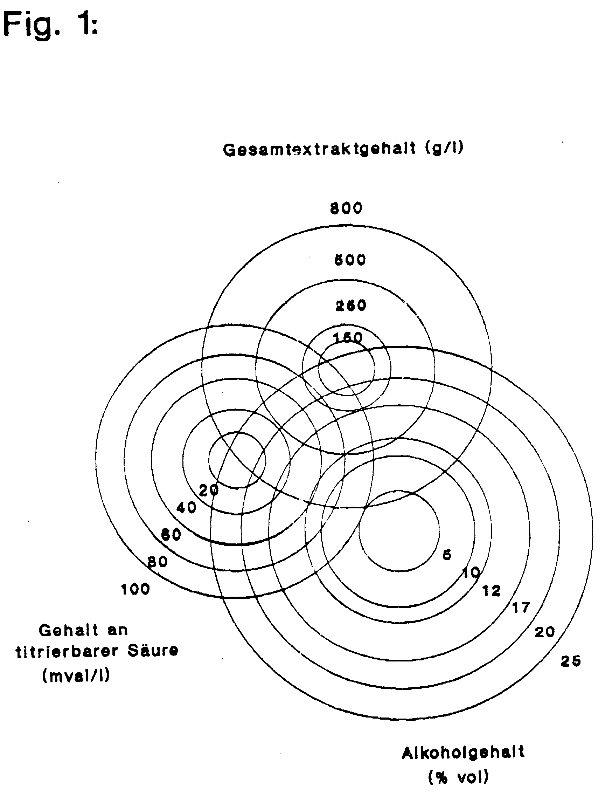

Überraschendereise zeigen die erfindungsgemäßen Zubereitungen besonders dann ein ausgewogenen Geschmacksprofil und eine gute, herkömmlichen Produkten vergleichbare sensorische und mikrobiologische Stabilität, wenn sie in Abhängigkeit von der Höhe ihres Alkoholgehaltes einen Gehalt an Gessamtextrat und titrierbarer Säure besitzen, wie er sich aus Fig. 1 ergibt. Zur Erzielung des typischen und harmonischen Geschmacksprofils weisen erfindungsgemäße alkoholhaltige flüssige Zubereitungen bei einem Alkoholgehalt von 5 bis 10 % vol vorzugsweise einen Gesamtextraktgehalt von 546 bis 800 g/l und einen Gehalt an titrierbarer Säure von 71 bis 100 mval/l, bei einem Alkoholgehalt im Bereich von 10 bis 20 % vol einen Gesamtextraktgehalt von 97 bis 546 g/l und einen Gehalt an titrierbarer Säure von 13 bis 71 mval/l sowie bei einem Alkoholgehalt von 12 bis 17 % vol, einen Gesamtextraktgehalt von 262 bis 461 g/l und einen Gehalt an titrierbarer Säure von 35 bis 58 mval/l auf. Erfindungsgemäße alkoholhaltige flüssige Zubereitungen sind selbst bei Alkoholgehalten von wenigstens 5 % vol, wenn sie einen Gehalt an Gesamtextrakt und titrierbarer Säure aufweisen, wie er sich aus Fig. 1 ergibt, in ihrem sensorischen und mikrobiologischen Verhalten während der üblichen Lagerzeit den aus dem Stand der Technik bekannten herkömmlichen Produkten vergleichbar.

Die Viskosität der erfindungsgemäßen Zubereitung liegt geeigneterweise im Bereich von 10 bis 900 mPas, vorzugsweise im Bereich von 15 bis 500 mPas und insbesondere im Bereich von 20 bis 350 mPas. Die Bestimmung der Viskosität wird mit einem Brookfield Rotationsviskosimeter Modell DV-II in der auf 20 °C temperierten Probe durchgeführt, wobei die Messung im Bereich bis 50 mPas mit einer Spindel Nr. 1 und einer Rotationsgeschwindigkeit von 30 U/min, im Bereich bis 500 mPas mit einer Spindel Nr. 2 und 60 U/min und für Werte über 500 mPas mit einer Spindel Nr. 3 und 60 U/min und einer Rotationszeit von 120 sec erfolgt.

Die in der erfindungsgemäßen Zubereitung enthaltenen Pflanzensäfte können einfach und/oder mehrfach konzentrierte Fruchstsäfte, Fruchtmark, Gemusesäfte und Gemüsemark sein, die jeweils einzeln oder in Form von Gemischen angewandt werden können. Beispiele für Früchte für geeignete Fruchtsäfte und/oder Fruchtmark sind Kirschen, Zwetschen, Mirabellen, Aprikosen, Pfirsiche, Äpfel, Trauben, Erdbeeren, rote und schwarze Johannisbeeren, Orangen, Ananas, Zitronen, Limetten, Bananen, Mango, Passionfrüchte, Cherimoyas und andere tropische Früchte. Auch lactofermentierte Säfte mit Milchsäuregehalten von ca. 5 g/l sind erfindungsgemäß geeignet. Beispiele für weitere geeignete Pflanzensäfte, die einzeln oder in Kombination angewandt worden können, sind Saft oder Mark von Möhren. Avocados, Melonen, Paprika, Rhabarber, Kürbis, Tomaten und dergleichen. Die Pflanzensäfte sind erfindungsgemäß in einer Menge enthalten, daß das Fertigprodukt, abhängig vom jeweiligen Alkoholgehalt, mindestens 13 mval/l, vorzugsweise 35 bis 58 mval/l titrierbare Säure enthält Vorzugsweise sind in den erfindungsgemäßen Zubereitungen, einzeln oder in Form von Gemischen, 5 bis 25 Gew.-% insbesondere 7 bis 15 % Gew.-% Pflanzensäfte, d.h. Fruchtsaft, Fruchtmark, Gemüsesaft und/oder Gemüsemark enthalten. Die Pflanzensäfte können auch ganz oder teilweise durch Genußsäuren oder Genußsäuren und Aromastoffe ersetzt werden Erfindungsgemäß können den alkoholhaltigen flüssigen Zubereitungen Genußsäuren wie z.B. Apfelsaure, Weinsäure, Citronensäure, Milchsäure, Bernsteinsäure, Fumarsäure, Ascorbinsäure oder Phosphorsäure und dergleichen zugesetzt werden. Als Aromastoffe geeignet sind z.B. Fruchtaromen, wie Orangen-, Bananen-, Erdbeer- und Pfirsicharoma und/oder Aromen wie Vanille-, Schokoladen- und Kaffeearoma.

Zur geschmacklichen Abrundung können den Zubereitungen auch Kochsalz und/oder andere Salze, wie z.B. Salze der Citronensäure, Äpfelsäure, Ascorbinsäure, Milchsäure und dergleichen zugesetzt werden. Zur weiteren Abrundung bzw. Vorfeinerung des Mundgefühls sind Zusätze, wie Emulgatoren, beispielsweise Leoithin oder Mono- und Diglyceride von Speisefettsäuren mit Genußsäuren oder Polyssaccharide, z.B. Hydrokolloide wie Alginate, Agar-Agar, Carrageen, Gummi arabicum, Tarakernmehl, Traganth, Guarkernmehl, Johannisbrotkernmehl, Carboxymethylcellulose, Xanthan, Pektine u.a. Gummen geeignet. Durch den Zusatz von geschmacksabrundenden Zusätzen wie Kräuterauszügen und/oder Gewürzauszügen, werden Produkte mit völlig neuartigem Geschmack erhalten. Beispiele für Kräuter- und Gewürzauszüge sind Auszüge von Minze, Zitronenmelisse, Salbei, Kamille, Thymian, Rosmarin, Muskat, Koriander, Zimt, Ingwer, Wacholder, schwarzer Pfeffer, Gewürznelke, Cardamom und Sternanis, die jeweils einzeln oder in Mischung angewandt werden können.

Als Süßungsmittel geeignet sind erfindungsgemäß alle für die Likör- und Nahrungsmittelbereitung üblichen Süßungsmittel, wie z.B. Mono- und/oder Disaccharide, wie Zucker, Zuckersirup, Invertzuckersirup, Glucose, Glucosesirup, hochfructoschaltiger Glucosesirup, Fructose und Honig. Diese Süßungsmittel sind einzeln oder in Form von Gemischen, gegebenenfalls auch im Gemisch mit Zuckeraustauschstoffen, wie Sorbit Mannit und Xylit und/oder Süßstoffen, wie Saccharin, Cyclamat, Acesulfam K, Aspartam, Neohesperidin, Sucralose und dergleichen verwendbar. Die Süßungsmittel werden in den erfindungsgemäßen Getränken, abhängig vom jeweiligen Alkoholgehalt, geeigneterweise in einer Menge von 20 bis 500 g/l, vorzugsweise in einer Menge von 50 bis 500 g/l und insbesondere von 100 bis 300 g/l zugesetzt.

Die erfindungsgemäßen Zubereitungen können weitere Zusätze enthalten. Zu diesen gehören z.B. zur Färbung von Lebensmitteln zugelassene Farbstoffe oder färbende Lebensmittel, z.B. Rote Bete-Saftkonzentrat, Stoffe mit antioxidierender Wirkung, wie Ascorbinsäure und Tocopherole, Milcherzeugnisse, wie teil- oder vollentrahmte Milch, frische oder haltbar gemachte Sahne, Joghurt, Magermilchjoghurt, Buttermilch, Süß- und/oder Sauermolke, Milchtrockenerzeugnisse, Kondensmilch, aus frischem Rahm oder frischer Butter gewonnenes Milchfett, Sojamilch, Sojaprotein, pflanzliche Fette und Öle, beispielsweise Kokos - und Palmkernfett, Kakaobutter, Soja-, Sonnenblumen- und Erdmißöl. Zum teilweisen oder auch völligen Ersatz der Milchprodukte und/oder der pflanzlichen Fette sind auch sognannte Fettersatzprodukte geeignet. Unter Fettersatzprodukten werden Verbindungen verstanden, die durch chemische oder physikalische Bearbeitung aus Stärke, Cellulose, Zucker und Fettsäuren oder aus Eiweißmischungen hergestellt werden Diese Produkte können erfindungsgemäß einzeln oder im Gemisch miteinander angewandt werden.

Wasser wird in den erfindungsgemäßen Zubereitungen vorzugsweise in Form von entgastem bzw. entmineralisiertem und entgastem Wasser angewandt Du entgaste Wasser weist geeigneterweise einen Gehalt an gelösten Gasen von < 5 mg/l und vorzugsweise einen Gehalt an gelösten Gasen von weniger als 1 mg/l auf.

Die erfindungsgemäßen Zubereitungen können in verschiedener Weise und zu verschiedenen Anlässen konsumiert werden, z.B. in direkter oder in gekühlter Form als Getränke, flüssige oder cremeartige Soßen, die beispielsweise für Kuchen oder Desserts und dergleichen Anwendung finden oder insbesondere in gefrorenem Zustand z.B. wie Speiseeis Halbgefrorenes, Sorbet oder dergleichen.

Die Herstellung der erfindungsgemäßen Getränke erfolgt derart, daß man zunächst eine Mischung aus Eigelb und Eiklar als Eigelbmasse vorlegt, wobei das Eigelb auch ganz oder teilweise durch cholesterinarmes oder cholesterinfreies Eigelb, wie es vorstehend beschrieben wurde und/oder durch aus getrocknetem Eipulver rekonstituiertes Eigelb ersetzt werden kann. Dieser Eigelbmasse werden anschließend Wasser und Süßungsmittel in kristalliner Form oder als vorgelöster Sirup, z. B. Invertzuckersirup, sowie gegebenenfalls Zusätze wie Milcherzeugnisse, Emulgatoren, wie Lecithin, und/oder weitere Zutaten, z.B. Polysaccharide, wie Hydrokolloide, z.B. Alginat und dergleichen zugemischt, die vorzugsweise zuvor in Wasser vorgelöst werden. Anschließend versetzt man diese Mischung unter Rühren mit der erforderlichen Menge Alkohol, vorzugsweise in Form einer Alkohol-Wasser-Mischung und unter weiterem ständigen Rühren mit den geschmacksbestimmenden Zusätzen, d.h. Pflanzensäften, wie Fruchtsäften, Fruchtmark, Gemüsesäften und/oder Gemüsemark, gegebenenfalls auch in konzentrierter Form, und/oder gegebenanfalls Genußsäuren und Aromastoffen, geschmackssbrundenden Zusätzen, wie Kräuter- und/oder Gewürzauszügen, Kochsalz und/oder anderen Salzen sowie gegebenenfalls weiteren Zusätzen. Die Zugabe der erforderlichen Alkoholmenge soll vorzugsweise so erfolgen, daß im Verlauf der Herstellung der Alkoholgehalt der Mischung 30 % vol nicht übersteigt, um z.B. Ausflockungen, Serumbildung oder dergleichen zu vermeiden. Anschließend wird solange weitergerührt, bis eine homogene Mischung vorliegt. Danach wird die Mischung direkt weiterverarbeitet oder langsam erhitzt bis eine Temperatur von maximal 65°C erreicht ist. Die Mischung wird eine definierte Zeit, z.B. 60 Minuten bei dieser Temperatur gehalten und dann unter weiterem Rühren langsam auf z.B 25 °C zurückgekühlt Wird ein Getrank mit niedriger Viskositat gewünscht, so wird auf den vorgenannten Erhitzungsschritt entweder ganz verzichtet oder es werden niedrigere Erhitzungstemperaturen gewählt. Ebenso kann durch eine Verkürzung oder Verlängerung der Mischzeiten die gewünschte Konsistenz beeinflußt werden. Wird eine Erhitzung vorgenommen, so kann die Zugabe hitzeempfindlicher Pflanzensäte und/oder Aromastoffe gegebenenfalls auch nach der Erhitzung erfolgen, um eine möglichst aromaschonende Herstellung zu gewährleisten. Die anschließend erfolgende Homogenisierung kann z. B. mittels Zahnkranzdispergiermaschinen nach dem Rotor/Stator-Prinzip oder eines Hochdruckkolbenhomogenisators, z.B. mit Drücken von 50 bis 250 bar durchgeführt werden. Die Homogenisierung kann einstufig oder mehrstufig, z.B. zweistufig und gegebenenfalls auch bei höheren Temperaturen erfolgen.

Durch geeignete Maßnahmen während des gesamten Herstellungsprozeßes, insbesondere beim Pumpen und Mischen muß darauf geachtet werden, daß eine eventuelle Luft- bzw. Gasaufnahme vermieden wird bzw. auf das absolut unvermeidliche Maß beschränkt wird.

Um insbesondere beim Mischvorgang eine Thromberrwirkung zu vermeiden und eine eventuelle Lüft- bzw. Gasaufnahme auf des absolut unvermeidliche Maß zu beschränken, sind die Rührwerke geeigneterweise in exzentrischer Bauweise angeordnet. Vorzugsweise sollen sie polumschaltbar ausgelegt sein, um beim Leerfahren des Mischbehälters auf die geringere Drehzahl umschalten zu können. Bei kleineren Volumina können auch seitlich eingebaute Propellerrührwerke eingesetzt werden, wobei sicherzustellen ist, daß das Rührwerk nur bei Füllständen über 35 bis 40 % betrieben wird, um ein Einschlagen von Luft zu vermeiden.

Da der Gehalt an gelösten Gasen im tertiggestellten Produkt erfindungsgemäß 25 mg/l, vorzugsweise 10 mg/l und unsbesondere 5 mg/l nicht übersteigen soll, um Abscheidungen von Eieröl bei der üblichen Lagerung zu vermeiden, muß gegebenenfalls eine Entgasung vorgenommen werden. Die Entgasung wird vorzugsweise durch Anlegen eines Vakuums durchgeführt. Temperatur und Druck werden dabei so reguliert, daß eine möglichst vollständige und aromaschonende Arbeitsweise gewährleistet ist. Das ist dann gegeben, wenn die Höhe des Vakuums in Abhängigkeit von der Produkttemperatur so gewählt wird, daß im Verlauf der Entgasung der Siedepunkt des Produktes keinesfalls erreicht wird, sondern während des gesamten Vorganges leicht unterschritten wird. Da auch bei schonender Arbeitsweise ein Entweichen leicht flüchtiger Komponenten nicht völlig unterbunden werden kann, wird der Vakuumpumpe vorzugsweise eine zweistufige, frischwasser- und und kältemittelbeaufschlagte Kondensationseinrichtung vorgeschaltet und das zurückgewonnene Kondensat nach dem Injektorprinzip wieder in den Produktstrom eingespeist.

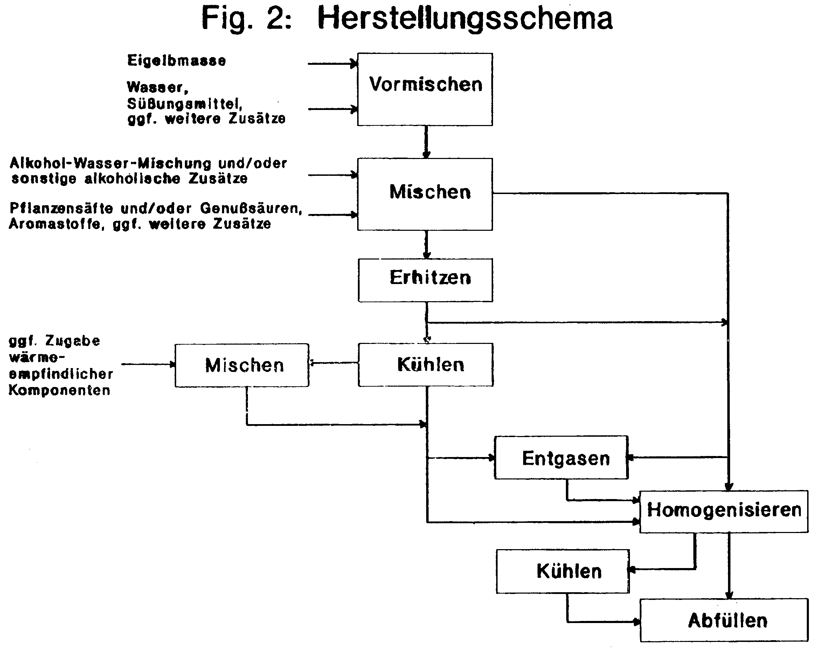

Der Ablauf des erfindungsgemäßen Herstellungsverfahrens ist schematisch in Fig. 2 dargestellt.

Die nachfolgenden Beispiele dienen der weiteren Erläuterung der Erfindung:

### Beispiel 1

Zur Herstellung von 2 Litern eines alkoholhaltigen Lulo-Ei-Getränkes wurden 240 g Lulomark, 668 g einer Mischung bestehend aus 38,9 % Eigelb, 12,5 % Eiklar und 48,6 % Zucker, 120 g Invertzuckersirup mit einem Trockensubstanzgehalt von 72,7 %, 739,1 ml entmineralisiertes und entgastes Wasser, 411,8 ml einer Mischung aus Ethylalkohol landwirtschaftlichen Ursprungs und entmineralisiertem und entgastem Wasser mit einem Alkoholgehalt von 68 % vol und 0,5 ml Zimtaromamischung verwendet.

Die Vormischung aus Eigelb, Eiklar und Zucker wurde unter Rühren mit dem entmineralisierten und entgasten Wasser gemischt. Danach wurde der Invertzuckersirup zugefügt. Unter ständigem Rühren wurde die Alkohol-Wasser-Mischung, das Lulomark und die Zimtaromamischung hinzugefügt und in 15 Minuten langsam auf 38-40° C erhitzt. Anschließend wurde die Mischung mit einem Inliner-Turrax (Zahnkranzdispergiermaschine) homogenisiert und auf ca. 20°C zurückgekühlt. Das Produkt hatte einen angenehm würzigen, fruchtig-säuerlichen Geschmack und wies folgend. Zusammensetzung auf;

| | |
|---|---|
| Alkohol | 14 % vol |
| Gesamtextrakt | 272,4 g/l |
| Titrierbare Säure | 45,3 mval/l |
| Eigelbgehalt | 130 g/l |
| Gehalt an gelösten Gasen | 1,5 mg/l |
| Viskosität | 55 mPas |

Bei dem in 0,1 l Taschenflaschen mit Schraubverschluß abgefüllten Getränk wurden bei üblicher Lagerung erste Abscheidungen von Eieröl erst nach ca. 13 Monaten festgestellt.

### Beispiel 2

Zur Herstellung von 5 Litern eines Avocado-Ei-Zitronengetränkes wurden 1.928 g der in Beispiel 1 beschriebenen Mischung aus Eigelb, Eiklar und Zucker, 125 g Invertzuckersirup, 1.000 g Avocadomark, 1.360 ml entmineralisiertes und entgastes Wasser, 1.029,4 ml einer Mischung aus Ethylalkohol landwirtschaftlichen Ursprungs und entmineralisiertern und entgastem Wasser mit einem Alkoholgehalt von 68 % vol, 58 g Zitronensaftkonzentrat und 10,8 ml einer aus Zitronenaroma, Ingwer- und schwarzem Pfefferextrakt bestehenden Abrundungsessenz benötigt.

Die Herstellung erfolgte wie in Beispiel 1 beschrieben, wobei die Mischung jedoch auf 52 °C erhitzt wurde.

Das Getränk, das eine leicht sämige Konsistenz aufwies, hatte einen würzigfrischen, nußartigen Geschmack und besaß folgende Zusammensetzung:

| | |
|---|---|
| Alkohol | 14 % vol |
| Gesamtextrakt | 334 g/l |
| Titrierbare Säure | 52,7 mval/l |
| Eigelbgehalt | 150 g/l |
| Gehalt an gelösten Gasen | 4,8 mg/l |
| Viskosität | 250 mPas |

Bei dem so hergestellten Getränk wurden bei den üblichen Lagerbedingungen nach ca. 11 Monaten noch keine Abscheidungen von Eieröl beobachtet.

### Beispiel 3

Zur Herstellung von 4 Litern einer flüssigen alkohol- und eigelbhaltigen Birnen-Schokoladen-Zubereitung wurden 1.697 g einer Mischung aus 41,7 % Eigelb, 9,7 % Eiklar und 48,6 % Zucker, 714,6 g Invertzuckersirup, 634 ml Weindestillat mit einem Alkoholgehalt von 75,7 % vol, 200 g geraspelte weiße Schokolade, 451,7 g Williams Christ Birnenmark, 46,4 g Zitrononsaftkonzentrat, 855 ml entmineralisiertes und entgastes Wasser und 0,6 ml einer Mandel-Haselnuß-Aromamischung verwendet.
Der Vormischung aus Eigelb, Eiklar, Zucker und Wasser wurden unter ständigan Rühren der Invertzuckersirup sowie die Schokolade zugesetzt. Nach Zugabe von Weindestillat, Birnenmark, Zitronensaftkonzentrat und der Aromamischung wurde die Mischung unter ständigem Rühren auf 58 °C erhitzt und unterhalb des Siedepunktes bei einem Vakuum von ca. 250 mbar entgast. Um den bei der Entgasung entweichenden Alkohol und die flüchtigen Aromastoffe zu kondensieren, wurde der Vakuumpumpe eine zweistufige, frischwasser- und kältemittelbeaufschlagte Kondensationseinrichtung vorgeschaltet. Nach 30 Minuten Mischzeit wurde auf ca. 25 °C abgekühlt und anschließend mittels eines Hochdruckkolbenhomogsnisators bei einem Druck von 220 bar homogenisiert. Die cremeartige flüssige Zubereitung hatte einen süß-säuerlich, fruchtig-schokolade-nußartigen Geschmack und wies folgende Zusammensetzung auf:

| | |
|---|---|
| Alkohol | 12 % vol |
| Gesamtextrakt | 334 g/l |
| Titrierbare Säure | 54,8 mval/l |
| Gehalt an gelösten Gasen | 3,9 mg/l |
| Eigelbgehalt | 177 g/l |
| Viskosität | 900 mPas |

Bei dem so hergestellten Produkt trat bei üblicher Lagerung nach ca. 13 Monaten keine Abscheidung von Eieröl auf.

### Beispiel 4

Zur Herstellung von 10 Litern einer flüssigen alkohol- und eigelbhaltigen Citrone-Limetten-Zubereitung wurden 558 g der in Beispiel 1 beschriebenen Mischung aus Eigelb, Eiklar und Zucker, 3198 g Joghurt, 45,7 g einer Mischung aus Citruspektin, Guarkernmehl und Xanthan, 4.750 ml einer Mischung aus Ethylalkohol landwirtschaftlichen Ursprungs und entmineralisiertem und entgastem Wasser mit einem Alkoholgehalt von 49,5 % vol, 3.070 ml entmineralisiertes und entgastes Wasser, 3,8 g Zitronensaftkonzentrat und 20 ml Citronen-Limetten-Aroma und verwendet.

Der Vormischung ans Eigelb, Eiklar, Zucker und einer Teilmenge Wasser wurde unter ständigem Rühren die Joghurtmasse zugesetzt. Danach wurden Citruspektin, Guarkernmehl und Xanthan in Wasser von 60°C vorgelöst und der übrigen Mischung zugesetzt. Anschließend wurden die Alkohol-Wassermischung und das zuvor mit einer Teilmenge Wasser verdünnte Zitronensaftkonzentrat unter ständigem Rühren zugefügt. Nach Zugabe der verbleibenden Wassermenge und der Aromamischung wurde du Produkt, das eine Temperatur von ca. 25 °C aufwies, im Vakuum entgast und danach mittels eines Hochdruckkolben-Homogenisators mit ca. 250 bar homogenisiert. Das erhaltene Getränk hatte einen fruchtigen, säuerlich-erfrischenden Geschmack und wies folgende Zusammensetzung auf:

| | |
|---|---|
| Alkohol | 15,2 % vol |
| Gesamtextrakt | 307,5 g/l |
| Titrierbare Säure | 36 mval/l |
| Eigelbgehalt | 20 g/l |
| Gehalt an gelösten Gasen | 4,5 mg/l |
| Viskosität | 31 mPas |

Das in 0,5 l Flaschen abgefüllte Getränk wies nach 12-monatiger Lagerung bei üblichen Bedingungen keine Abscheidung von Eieröl auf

### Beispiel 5

In einem weiteren Versuch wurde ein Getränk wie in Beispiel 4 beschrieben hergestellt, wobei start der Joghurtmasse eine Mischung bestehend aus ca. 93 % Süßmolke und ca. 7 % Kokosfett verwendet wurde und die Homogenisierung bei ca. 45°C und 250 bar durchgeführt wurde. Die Kokosfettmenge war so bemessen, daß das Fertiggetränk einen Fettgehalt von ca. 2,3 % aufwies.

Die so hergestellte Zubereitung war in ihrem Lagerverhalten dem in Beispiel 4 beschriebenen Produkt vergleichbar.

### Beispiel 6

Zur Herstellung von einem Liter eines erfindungsgemäßen Paprika-Ananas-Eigelb-Getränks wurden 308,5 g der in Beispiel 1 beschriebenen Mischung aus Eigelb, Eiklar und Zucker, 4,68 g 80%ige Milchsäure, 70 g rotes Paprikamark, 30 g Ananassaftkonzentrat, 50 g Traubenzucker, 3 g Kochsalz, 0,5 ml Gewürzextraktmischung (Pfeffer, Muskat, Liebstöckel), 427,3 ml entmineralisiertes und entgastes Wasser und 135,1 ml Kornfeindestillat mit einem Alkoholgehalt von 92,2 % vol verwendet.

Die Herstellung erfolgt gemäß der in Beispiel 3 beschriebenen Verfahrensweise mit der Ausnahme, daß kein Erhitzen erfolgte.
Das so hergestellte Getränk hatte einen süß-säuerlichen, würzig-fruchtigen Geschmack und wies folgende Zusammensetzung auf:

| | |
|---|---|
| Alkohol | 13 % vol |
| Gesamtextrakt | 264 g/l |
| Titrierbare Säure | 57,6 mval/l |
| Gehalt an gelösten Gasen | 2,5 mg/l |
| Eigelbgehalt | 120 g/l |
| Viskosität | 24 mPas |

Bei der Lagerung unter üblichen Bedingungen wurde bei dem so hergestellten Getränk nach ca. 12 Monaten noch keine Abscheidung von Eieröl beobachtet.

### Beispiel 7

Zur Herstellung von einem Liter eines Erdbeer-Vanille-Ei-Getränks wurden 150 g der in Beispiel 1 beschriebenen Eigelb-Eiklar-Zuckermischung, 179 g Invertzuckersirup mit einem Trockensubstanzgehat von 72,7 %, 42 g Honig, 80 ml Vollmilch, 4,3 g einer Mischung aus Pektin und Propylenglycolalginat, 463 ml entmineralisiertes und entgastes Wasser, 230 ml einer Mischung aus Ethylalkohol landwirtschaftlichen Ursprungs und entmineralisiertem Wasser mit einem Alkoholgehalt von 68 % vol, 10,2 g einer Mischung aus Erdbeersaft- und Zitronensaftkonzentrat und 4,6 ml einer Erdbeer-Vanille-Aromamischung verwendet.

Die Herstellung erfolgte wie in Beispiel 4 beschrieben. Das Getränk hatte einen fruchtig-frischen Geschmack und besaß folgende Zusammensetzung:

| | |
|---|---|
| Alkohol | 15,6 % vol |
| Gesamtextrakt | 262 g/l |
| Titrierbare Säure | 39 mval/l |
| Eigelbgehalt | 58 g/l |
| Gehalt an gelösten Gasen | 4,8 mg/l |
| Viskosität | 26 mPas |

Bei dem so hergestellten Getränk wurden bei üblicher Lagerung nach ca. 12 Monaten noch keine Abscheidungen von Eieröl beobachtet.

### Beispiel 8

Zur Herstellung von 10 Litern eines Schokoladen-Pfefferminz-Citrus-Ei-Getränks mit einem Alkoholgehalt von 5 % vol wurden 5.000 g einer Mischung aus 36 % Eigelb, 15,4 % Eiklar und 48,6 % Zucker, 5.255 g Invertzuckersirup (Trockensubstanzgehalt 72,7 %), 670 ml weißer Rum mit einem Alkoholgehalt von 54 % vol, 700 g fein geraspelte weiße Schokolade, 44 g Citronensäuremonohydrat, 28 g Äpfelsäure, 72 ml entmineralisiertes und entgastes Wasser und 76 ml einer Pfaffarminz-Orangen-Citonenaromamischung verwendet.

Die Vormischung aus Eigelb, Eilder, Zucker und Invertzucker wurde unter ständigem Rühren mit der Hälfte des Wassers gemischt Anschließend wurden der Rum und die fein geraspelte Schokolade untergemischt. In der restlichen Wassermenge wurden Citronen- und Äpfelsäure gelöst und zusammen mit der Aromamischung vorsichtig unter ständigem Rühren der übrigen Mischung zugesetzt. Das Produkt wurden auf ca. 55°C erhitzt und danach zweistufig mittels Hochdruckkelben Homogenisators homogenisiert, wobei in der ersten Stufe 180 bar und in den zweiten Stufe 55 bar angewandt wurden. Das erhaltene Getränk wurde anschließend auf ca. 20°C zurückgekühlt und in geeignete Gefäße abgefüllt. Es hatte einen aromatischen, ausgewogenen süß-säuerlichen Geschmack und wies folgende Zusammensetzung auf:

| | |
|---|---|
| Alkoholgehalt | 5 % vol |
| Gesamtextrakt | 747 g/l |
| Titrierbare Säure | 93 mval/l |
| Eigelbgehalt | 180 g/l |
| Gehalt an gelösten Gasen | 7,3 mg/l |
| Viskosität | 54 mPas |

Bei der Lagerung unter üblichen Bedingungen wurde bei dem so hergestellten Getränk erst nach ca. 14 Monaten eine erste Abscheidung von Eieröl beobachtet.

## Patentansprüche

1. Zum Verzehr geeignete flüssige Zubereitung, enthaltend Alkohol, Eigelb, Eiklar, Pflanzensäfte und/oder Genußsäuren, Süßungsmittel, Wasser sowie gegebenenfalls übliche Zusätze, **dadurch gekennzeichnet**, daß sie
wenigstens 5 % vol Alkohol,
10 bis 500 g/l, vorzugsweise 20 bis 400 g/l Eigelb,
wenigstens 95 g/l Gesamtextrakt und
wenigstens 13 mval/l titriertbare Säure
enthält und eine Viskosität von 10 bis 900 mPas aufweist und daß der Gehalt an gelösten Gasen 25 mg/l nicht übersteigt.

2. Zubereitung nach Patentanspruch 1, **dadurch gekennzeichnet**, und der Gehalt an gelösten Gasen 10 mg/l nicht übersteigt.

3. Zubereitung nach einem der Patentansprüche 1 und 2, **dadurch gekennzeichnet**, daß du Eigelb ganz oder teilweise durch cholosterinfreies oder cholesterinarmes Eigelb ersetzt ist.

4. Zubereitung nach einem oder mehreren der Patentansprüche 1 bis 3 **dadurch gekennzeichnet**, daß der Alkoholgehalt 12 bis 17 % vol beträgt.

5. Zubereitung nach einem oder mehreren der Patentansprüche 1 bis 4, **dadurch gekennzeichnet**, daß sie 5 bis 25 Gew.-% Pflanzensäfte enthält.

6. Zubereitung nach einem oder mehreren der Patentansprüche 1 bis 5, **dadurch gekennzeichnet**, daß die Pflanzensäfte ganz oder teilweise durch Genußsäuren oder durch Genußsäuren und Aromastoffe ersetzt sind.

7. Zubereitung nach einem oder mehreren der Patentansprüche 1 bis 6, **dadurch gekennzeichnet**, daß sie Milcherzeugnisse enthält.

8. Verfahren zur Herstellung der zum Verzehr geeigneten flüssigen Zubereitung gemäß Patentanspruch 1 bis 7, wobei man einer Mischung aus Eigelb, Eiklar, Süßungsmitteln, Wasser und gegebenenfalls weiteren Zutaten unter Rühren Alkohol und anschließend die geschmacksbestimmenden sowie gegebenenfalls geschmacksabrundende Zusätze zusetzt, die erhaltene Mischung gegebenenfalls auf Temperaturen bis höchstens 65°C erhitzt, homogenisiert und das erhaltene Produkt in geeignete Behälter abfüllt, **dadurch gekennzeichnet**, daß man unter Vermeidung von Luft bzw. Gaszutritt arbeitet.

9. Verfahren nach Patentanspruch 9, **dadurch gekennzeichnet**, daß man vorzugsweise vor der Homogenisierung eine Entgasung durchführt.
